# DEMANDE DE BREVET EUROPEEN

(11) **EP 1 228 849 A1**
(43) Date de publication de la demande: **07.08.2002**
(21) Numéro de dépôt: 02290220.9
(22) Date de dépôt: 31.01.2002
(51) Int. Cl.: B29B 17/00, B30B 9/32, B30B 9/30

(54) **Appareil de réduction de bouteilles**

(30) Priorité: 31.01.2001 FR 0101752
(71) Demandeur: G.C. Production, 16220 Montbron (FR)
(72) Inventeur: Gautereau, Gerard, 16000 Angouleme (FR)
(74) Mandataire: Thibon-Littaye, Annick

(57) **Abrégé**

Appareil de réduction de bouteilles en matière plastique, débarrassées de leur bouchon, comprenant, à l'intérieur d'une enveloppe protectrice (1*a*- *1b*), des moyens de réception partielle d'une bouteille à réduire introduite par une ouverture (23) ménagée à cet effet en partie haute de l'appareil jusqu'à amener son fond en butée sur un support (31) prévu à cet effet, des moyens ventilateurs (5) pour aspirer de l'air extérieur, le faire circuler au voisinage de moyens de chauffage (4) et le refouler en un jet annulaire d'air chaud projeté vers une partie inférieure de ladite bouteille déjà présente dans ladite enveloppe, et des moyens (2) de pression manuelle sur une partie supérieure de ladite bouteille encore extérieure à ladite enveloppe pour l'enfoncer en appui sur ledit support (31) par repliement progressif sur elle-même de sa paroi ramollie par l'air chaud projeté.

## Description

La présente invention concerne la conception et la réalisation d'un appareil permettant de réduire le volume des bouteilles en matière plastique une fois qu'elles ont été vidées de leur contenu et débarrassées de leur bouchon, en s'intéressant en particulier à un tel appareil qui se présente sous une forme adaptée pour une utilisation domestique. On entend par là, que par la majorité des atouts qu'il présente dans ses formes de réalisation préférées, l'appareil suivant l'invention devrait vite trouver sa place chez tous les particuliers. Il pourra rester à la disposition de la ménagère, en général dans sa cuisine, et l'on pourra s'en servir pour mettre chaque bouteille devenue inutile sous forme comprimée au moment de la jeter à la poubelle.

Ceci n'exclut pas pour autant les applications où l'appareil serait utilisé d'une façon plus systématique, par exemple dans les restaurants d'entreprise, les collectivités quelles qu'elles soient, les fabricants de produits alimentaires, etc., en pratique dans tous les lieux où l'on consomme des produits qui sont livrés à l'état liquide dans des bouteilles en matière plastique plutôt que dans des bouteilles en verre. Dans la vie courante, il s'agira donc principalement des bouteilles d'eau, de jus de fruit ou soda, de vin, d'huile, de vinaigre, encore que le conditionnement dans des bouteilles en matière plastique, actuellement si répandu, peut s'appliquer à bien d'autres produits.

Bien que l'invention soit décrite ici sous une forme de réalisation convenant particulièrement bien à un dimensionnement adapté au traitement des bouteilles dont la contenance est de l'ordre du litre, il n'y a là rien de limitatif, et il serait aisé d'adapter les détails de sa construction pour servir au traitement, de manière similaire, de bouteilles de bien d'autres dimensions. La notion de bouteille doit donc être comprise comme englobant, en particulier, des flacons tels que ceux qui peuvent être utilisés dans les laboratoires, les pharmacies, etc. Par ailleurs, l'invention n'est pas limitée à une section particulière de bouteilles. Les bouteilles de section circulaire sont les plus fréquentes mais l'appareil suivant l'invention peut également être réalisé pour servir à traiter des bouteilles de section ovale par exemple, ou de section triangulaire, carrée ou autrement polygonale.

Il est à noter que, sous un même modèle de dimension déterminée, un appareil construit conformément à l'invention peut convenir à la réduction de bouteilles très différentes par leur forme en général, en particulier par leur section, leur diamètre, leur hauteur, et convenir ainsi, par exemple, pour toutes les bouteilles en matière plastique que la ménagère peut avoir à évacuer dans sa cuisine.

La souplesse d'emploi de l'appareil suivant l'invention s'étend aussi aux parois des bouteilles à traiter, qui peuvent être très variables en ce qui concerne notamment l'épaisseur de paroi ou la nature du matériau la constituant. On trouve d'ailleurs là un avantage important obtenu grâce à l'invention, dans la mesure où, par exemple, l'appareil suivant l'invention peut rendre malléables des matières plastiques relativement rigides et servir par exemple à réduire des bouteilles d'eau minérale gazeuse ou autres boissons pétillantes qui sont difficiles, voire impossibles, à comprimer à la main.

Quoi qu'il en soit, même pour des bouteilles qui, par la matière les constituant, sont faciles à comprimer à la main une fois vides, l'invention présente l'avantage de conduire à une réduction beaucoup plus efficace. Cet avantage résulte notamment du fait que la réduction s'opère dans le sens longitudinal de la bouteille, en la repliant sur elle-même en accordéon. Le résultat est également beaucoup plus régulier d'une bouteille à une autre. On notera en outre que, suivant ses modes de réalisation préférés, l'invention permet de réaliser la déformation longitudinale jusqu'à ce que le goulot de la bouteille se loge à l'intérieur de la paroi cylindrique de la paroi repliée en accordéon jusqu'à buter sur le fond de la bouteille, le goulot étant en général plus difficile à ramollir que le fût de la bouteille, ce qui a pour conséquence qu'il reste rigide.

Dans le but de parvenir à de tels résultats et d'assurer un tel fonctionnement avantageux, l'invention propose un appareil de réduction de bouteilles en matière plastique qui permet d'appuyer sur la bouteille pendant qu'elle est exposée à un jet d'air chaud produit dans l'appareil. De la sorte, on peut assurer un ramollissement local de la paroi de la bouteille, qui se replie alors facilement, sans pour autant risquer de provoquer sa combustion ou de la rendre pâteuse et collante.

Conformément à l'invention, l'appareil comprend ainsi, à l'intérieur d'une enveloppe protectrice, des moyens de réception partielle d'une bouteille à réduire introduite par une ouverture ménagée à cet effet en partie haute de l'appareil jusqu'à amener son fond en butée sur un support prévu à cet effet. Suivant des formes de réalisation préférées de l'invention, ce support présente une forme de coupelle réceptrice pour le fond de la bouteille à traiter. Egalement à l'intérieur de l'enveloppe, il est prévu des moyens ventilateurs pour aspirer de l'air extérieur, le faire circuler au voisinage de moyens de chauffage, avantageusement du type à résistance électrique, dans un espace annulaire ménagé autour desdits moyens de réception partielle d'une bouteille, et le refouler en un jet annulaire d'air chaud qui est projeté radialement vers une partie inférieure de ladite bouteille déjà présente dans ladite enveloppe. Enfin, l'appareil comporte aussi des moyens de pression manuelle sur une partie supérieure de ladite bouteille encore extérieure à ladite enveloppe pour l'enfoncer en appui sur ledit support par repliement progressif sur elle-même de sa paroi ramollie par l'air chaud projeté.

Des appareils de réduction de bouteilles fonctionnant par application d'air chaud sur la paroi de la bouteille, en combinaison avec une pression exercée longitudinalement sur sa partie supérieure, ont été décrits par l'art antérieur. On peut en particulier citer les demandes de brevet FR 2 668 732 et FR 2 709 699, ainsi que la demande de brevet FR 2 734 509. Or, si les appareils décrits dans ces documents sont pourvus de moyens de production de chaleur et d'application de la chaleur produite autour de la paroi de la bouteille à réduire, ils diffusent cette chaleur sur une large zone de la paroi, qui peut même s'étendre sur toute la hauteur de la bouteille. Au contraire, la présente invention prévoit de concentrer l'air chaud annulairement sur une section bien précise de la bouteille, et qui plus est, de le projeter en un jet annulaire dirigé radialement sur la paroi à ramollir.

Ainsi, l'invention tire avantageusement profit du point de faiblesse créé sur la paroi de la bouteille pour réaliser un ramollissement plus efficace et plus rapide que ce que pouvait permettre l'art antérieur. Combiné à la pression régulière exercée sur la partie supérieure de la bouteille, ce ramollissement intense et localisé permet d'obtenir un compactage plus homogène. Il s'y ajoute un meilleur rendement dans l'utilisation de la puissance de chauffage de l'air, le chauffage étant réalisé au sein de l'appareil, avantageusement au plus près en amont d'une fente circulaire d'éjection de l'air chaud, dans un espace annulaire où la puissance est régulièrement répartie.

Suivant ses modes de réalisation préférés, l'appareil suivant l'invention présente diverses autres caractéristiques, qui sont mises en oeuvre chacune séparément ou ensemble dans l'une ou l'autre de leurs combinaisons techniquement opérantes. Certaines d'entre elles permettent en particulier de répondre à un objectif secondaire de l'invention, à savoir de tirer profit du jet d'air chaud produit à l'intérieur de l'appareil pour d'autres utilisations requérant également une production contrôlée de chaleur à appliquer à un endroit précis. On pense en particulier à des applications en tant que sèche-mains, chauffe-plats ou chauffe-biberons, bien que l'appareil suivant l'invention ne se limite pas à ces applications particulières. L'invention a ainsi également pour objectif de fournir un appareil multifonctions, que l'utilisateur pourra utiliser à tout moment, suivant le besoin, dans l'une ou l'autre de ses fonctions.

Parmi les caractéristiques de l'appareil suivant l'invention, qui ressortiront mieux, avec leurs avantages, dans la suite de la présente description, il figure celles qui consistent à prévoir, à l'intérieur du corps de l'appareil limité par ladite enveloppe protectrice, des moyens déflecteurs qui canalisent l'air et organisent sa circulation en un flux annulaire autour d'un noyau de réception d'une partie inférieure de ladite bouteille. Avantageusement, ce noyau, interne au corps de l'appareil et disposé à l'intérieur de l'enveloppe protectrice faisant partie du même corps, forme une jupe annulaire qui délimite un espace annulaire ménagé entre elle et ladite enveloppe protectrice. Avantageusement, il est supporté entre ladite jupe annulaire et ladite enveloppe protectrice une résistance de chauffage de l'air à son passage dans ledit espace annulaire, entre un compartiment inférieur d'aspiration de l'air à partir de l'extérieur, et un compartiment supérieur dans lequel l'air est projeté, les deux compartiments étant ménagés dans le corps de l'appareil autour dudit noyau interne.

Le même noyau, ou une autre pièce interne du corps de l'appareil coopérant avec lui en tant que déflecteur guidant l'air vers la résistance de chauffage, peuvent avantageusement servir de support pour le montage de moyens ventilateurs formés par un ventilateur à entraînement électrique associé à son moteur d'entraînement. Avantageusement, lesdits moyens ventilateurs sont montés dans une jupe inférieure interne à ladite enveloppe protectrice, qui est prolongée pour former déflecteur pour la circulation de l'air aspiré.

Par ailleurs, on a en général intérêt à construire la jupe annulaire du noyau interne de manière à lui faire remplir simultanément plusieurs fonctions, à savoir notamment celle de protéger la résistance en empêchant que l'utilisateur puisse y accéder et venir s'y brûler accidentellement, avantageusement en combinaison avec d'autres caractéristiques du corps de l'appareil, telles que la présence d'une fente annulaire de faible espacement réalisant la jonction entre l'espace annulaire dans lequel est supportée ladite résistance électrique et ledit compartiment supérieur auquel l'utilisateur a librement accès. Il est également avantageux que ladite jupe annulaire soit telle qu'elle définisse une limite périphérique pour une coupelle de réception du fond de la bouteille à l'intérieur d'un compartiment supérieur ménagé dans le corps de l'appareil, la bouteille à traiter étant alors en appui par son fond sur un plateau support formé par le noyau interne en travers de ladite jupe annulaire autour de laquelle est disposée la résistance de chauffage.

Suivant d'autres caractéristiques encore de l'invention, les parois du compartiment supérieur du corps de l'appareil limitant la circulation de l'air chauffé sont configurées en forme de déflecteurs courbes pour ramener le jet annulaire d'air chaud vers le pourtour d'une bouteille en cours de réduction qui a été mise en place pour traitement en son centre. Avantageusement, le corps de l'appareil comporte des moyens déflecteurs permettant de canaliser le flux d'air en sortie de l'espace annulaire où il a été chauffé et de le projeter radialement vers la paroi de la bouteille présente dans ledit compartiment supérieur. On peut en outre avoir intérêt à prévoir un rétrécissement du flux d'air de manière à augmenter sa vitesse en cet endroit. D'autre part, l'ouverture par laquelle on introduit progressivement la bouteille au fur et à mesure que sa paroi se replie sur elle-même et qu'elle s'enfonce dans le corps de l'appareil est avantageusement de diamètre suffisant pour laisser l'air s'échapper ensuite librement de l'appareil en passant à travers cette ouverture tout autour de la bouteille en cours de traitement.

Selon un mode de mise en oeuvre préféré de l'invention, les moyens de pression utilisés pour enfoncer progressivement la bouteille en appui par son fond sur un organe support tel que le plateau dont on a parlé précédemment, sont essentiellement réalisés sous la forme d'un couvercle amovible conçu pour venir fermer l'ouverture d'introduction de la bouteille quand l'appareil est au repos, non utilisé. Un tel couvercle, ou organe analogue, est préférentiellement conformé d'autre part pour servir de poignée, pour permettre éventuellement de porter la bouteille accrochée à lui, et pour présenter un guide centreur formé d'une partie centrale en saillie s'engageant dans le goulot de la bouteille. De telles dispositions ont l'avantage de contribuer à un guidage de la bouteille en la maintenant centrée dans l'axe de l'appareil, donc en général verticalement quand l'appareil est posé sur un plan horizontal.

Suivant une autre caractéristique avantageuse de l'appareil objet de l'invention, celui-ci comporte donc un organe presseur formant une poignée de préhension manuelle ainsi qu'un guide centreur, s'adaptant à l'intérieur du goulot de la bouteille, qui est évidé de manière à permettre à l'air de s'échapper de la bouteille lors de son traitement pour compactage.

Selon un mode de mise en oeuvre préféré de l'invention, ledit couvercle présente une forme permettant, lorsqu'il se trouve en position de fermeture du corps de l'appareil, alors qu'aucune bouteille n'est en place dans celui-ci, de diriger le flux d'air chaud projeté dans le compartiment supérieur de l'appareil en fonctionnement vers un espace extérieur défini, et de le concentrer à cet endroit. De la sorte, l'appareil peut avantageusement être utilisé dans une fonction de sèche-mains, puisqu'il suffit à l'utilisateur, dans cette configuration de fonctionnement de l'appareil, de placer ses mains à l'endroit précis où se concentre le souffle d'air chaud pour bénéficier de l'effet de celui-ci. Suivant une caractéristique avantageuse de l'invention, ledit couvercle possède une paroi interne convexe et il est prolongé à une extrémité par une visière ouverte de forme convexe et incurvée vers le bas.

En combinaison avec ces caractéristiques permettant une utilisation de l'appareil en mode sèche-mains, le couvercle amovible de l'appareil est avantageusement muni de pieds s'insérant dans des cavités constituées dans le corps de l'appareil et situées en vis-à-vis desdits pieds sur le bord supérieur du corps de l'appareil délimitant l'ouverture à fermer par ledit couvercle. La coopération des pieds et des cavités associées permet de guider le couvercle lors de sa mise en place. Outre ce positionnement, il est souvent avantageux de prévoir que les pieds se fixent dans les cavités correspondantes, par exemple par un effet de baïonnette ou de clipsage élastique. Une telle fixation solide du couvercle sur le corps de l'appareil permet d'éliminer les risques de désolidarisation des deux éléments sous l'effet de la pression du jet d'air chaud s'échappant de l'appareil fermé. L'air chaud en est d'autant mieux canalisé par le couvercle vers la visière d'éjection du flux d'air dans l'environnement extérieur.

Par ailleurs, suivant une autre caractéristique avantageuse de l'invention, l'appareil comporte un dispositif amovible de support de récipients, à poser sur le bord supérieur du corps de l'appareil délimitant ladite ouverture, quand aucune bouteille n'est disposée dans le compartiment supérieur. Cette caractéristique répond à un objectif secondaire de l'invention, à savoir de proposer un appareil de réduction de bouteilles également utilisable dans une fonction de chauffe-plats. Le dispositif support est avantageusement formé d'une grille plate, notamment d'une plaque perforée munie de pieds destinés à venir s'insérer dans des cavités de réception et/ou de fixation situées en vis-à-vis sur ledit bord supérieur. On prévoit de façon tout-à-fait avantageuse de former et disposer ces pieds de manière à pouvoir les insérer dans les cavités du corps de l'appareil prévues pour le positionnement et la fixation éventuelle du couvercle, y compris préférentiellement dans le cas où, pour un appareil multi-fonctions, il est également prévu de réaliser ce couvercle en forme de casquette à visière servant en chauffe-mains.

Dans le cas d'un appareil multi-fonctions pouvant servir de chauffe-plate et éventuellement en outre de chauffe-mains, une autre particularité de l'inventionn consiste à ménager dans le corps de l'appareil un logement en sous-face, autour du ventilateur, pour y recevoir à la fois la plaque support de plat et le cordon d'alimentation électrique.

Dans ses formes de réalisation pratiques, l'appareil est avantageusement construit en utilisant au maximum des matériaux thermiquement inertes à base de polymères, du type des matières plastiques, qui sont mis en oeuvre par moulage, l'enveloppe externe et le noyau interne du corps ainsi que le couvercle étant avantageusement chacun d'une seule pièce. Pour un coût de fabrication compatible avec les conditions du marché et une faible consommation énergétique, on peut s'assurer par exemple d'atteindre rapidement une température d'air chaud de l'ordre de 110-120 °C au moyen d'une résistance de 2 000 watts par exemple, et permettre ainsi de compacter en une dizaine de secondes une bouteille en matière plastique de modèle courant, en chlorure de polyvinyle par exemple.

Il est par ailleurs avantageux de pouvoir chauffer le jet d'air à deux températures différentes, qui sont choisies pour permettre de compacter efficacement, grâce à une température plus élevée de l'air chaud, des bouteilles en matières plastiques plus rigides, telles que les bouteilles contenant des boissons gazeuses, sans toutefois risquer une surchauffe et une fusion que cette température élevée provoquerait sur des bouteilles en matières plastiques moins rigides, sur lesquelles on projètera préférentiellement un air à plus basse température. D'autre part, on peut aussi, par une sélection appropriée des puissances de chauffage, s'assurer d'une production de chaleur dont l'intensité soit adaptée à chacun des autres modes d'utilisation de l'appareil. Avantageusement, l'appareil suivant l'invention comporte des moyens de variation de la puissance électrique de chauffage contrôlés par un interrupteur assurant également la commande de mise en route et d'arrêt du fonctionnement des moyens de chauffage et des moyens ventilateurs.

L'invention sera maintenant plus complètement décrite dans le cadre de modes de réalisation particuliers de l'appareil de réduction de bouteilles suivant l'invention, choisis comme exemples non limitatifs, tel qu'ils sont illustrés par les figures 1 à 5, dans lesquelles :
- la figure 1 représente schématiquement l'appareil suivant un des modes de réalisation de l'invention, l'appareil étant vu en coupe suivant un plan vertical quand il est en position normale d'utilisation, posé sur une table par exemple ;
- la figure 2 est une vue en coupe suivant un plan vertical d'un appareil suivant un autre mode de réalisation préféré de l'invention, plus élaboré, l'appareil étant également en position normale d'utilisation ;
- la figure 3 est une vue en coupe de l'appareil de la figure 2 suivant le plan de coupe III-III ;
- la figure 4 illustre l'utilisation de l'appareil des figures 2 et 3 en montrant une bouteille en matière plastique qui y est disposée prête à être soumise à réduction ;
- et la figure 5 évoque le dernier stade de la réduction, en montrant la bouteille vue extérieurement en fin de réduction, avant qu'elle soit extraite de l'appareil pour être jetée.

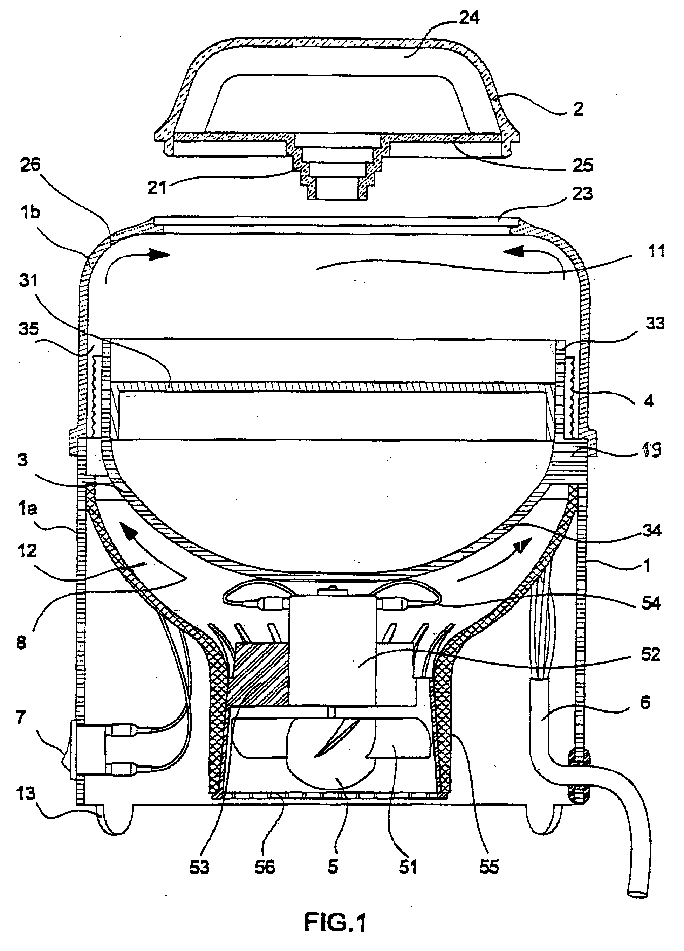

Comme on peut le voir sur la figure 1, suivant un des modes de réalisation préférés de l'invention, l'appareil de réduction de bouteilles décrit est essentiellement constitué en deux parties, à savoir un corps principal 1 et un couvercle 2, qui présentent l'un et l'autre un axe de symétrie circulaire, orienté verticalement dans la position représentée sur la figure. Le corps 1 comprend lui-même plusieurs éléments, dont deux pièces sensiblement cylindriques, 1*a* et 1*b*, qui sont emboîtées solidaires dans le prolongement l'une de l'autre pour constituer ensemble une enveloppe extérieure qui protège les constituants internes. La pièce inférieure 1*a* forme un socle, muni en partie basse de l'appareil de trois pieds angulairement équidistants 13, tandis que la pièce supérieure 1*b* forme en partie haute une ouverture 23 que le couvercle 2 sert à fermer quand l'appareil n'est pas en cours d'emploi.

Dans le mode de réalisation décrit ici, le couvercle 2 assure plusieurs fonctions, car il constitue également les moyens de pression à l'aide duquel l'utilisateur appuie manuellement sur la bouteille pour la compacter. Il forme une poignée 24, qui facilite sa manipulation, et un disque 25 de contour circulaire adapté à celui de l'ouverture 23, dans laquelle il vient avantageusement s'adapter et se fixer par clipsage élastique des bords en vis-à-vis. En effet, on admet qu'en pratique, le corps 1 comme le couvercle sont réalisés en matière plastique, de type dit rigide.

Dans l'axe de l'appareil, le couvercle est avantageusement configuré pour constituer un guide 21 se centrant sur la bouteille à réduire quand on introduit celle-ci dans l'ouverture 23 par son fond. Ce guide est illustré par une saillie circulaire à gradins, qui est dimensionnée pour pénétrer dans le goulot de la bouteille. Son diamètre va en décroissant à partir du dessous du disque inférieur 25 du couvercle 2. Cette disposition permet, le cas échéant, de faciliter le guidage pour des goulots de bouteilles de diamètres différents. La forme de la poignée est, quant à elle, essentiellement définie en liaison avec son fonctionnement comme organe de pression manuelle. Toutefois, suivant les formes de réalisation de l'appareil compacteur, elle peut aussi se révéler commode en organe de préhension manuelle pour porter l'appareil, quand le couvercle peut se fixer de manière suffisamment solide sur le corps 1.

A l'intérieur du corps de l'appareil, qui est creux, on distingue un compartiment supérieur 11 et un compartiment inférieur 12. Les deux compartiments sont séparés par un noyau interne 3, qui laisse subsister un espace annulaire 35 dans lequel se place une résistance électrique 4. Cette résistance est constituée par une série de spires filaires. Elle est soutenue par des lamelles de montage et ainsi portée par un manchon formé en jupe cylindrique 33 par une partie supérieure du noyau 3. Ce dernier est illustré comme étant creux. Son fond 34 est avantageusement bombé en forme sphérique. Il est fixé centré dans l'axe de l'enveloppe 1 par des pattes 19. Il est toutefois à noter ici que dans la pratique industrielle, on aura en général intérêt à réduire le nombre des pièces à assembler et à réaliser le corps principal d'une part, le couvercle d'autre part, chacun d'une seule pièce par moulage de matière plastique.

Le compartiment supérieur 11 est destiné à recevoir partiellement la bouteille à réduire, que l'on introduit verticalement par l'ouverture 23. Le noyau 3 comporte un plateau support qui est destiné à recevoir en butée le fond de la bouteille et qui est illustré sur la figure 1 par une plaque horizontale 31 en travers de la jupe 33. Cette plaque est représentée pleine, mais elle pourrait aussi être ajourée ou réduite à une grille ou à des tiges rayonnantes. Elle se complète avec la partie supérieure du manchon 35 pour former une coupelle de réception du fond de la bouteille à réduire. Une coupelle ayant un rôle analogue pourrait être ménagée dans la plaque 31 elle-même, pour mieux guider et maintenir la bouteille dans l'axe de l'appareil, éventuellement en coopération avec d'autres moyens de guidage et de maintien tels que le guide 21 du couvercle. Dans tous les cas, la plaque 31 constitue un support sur lequel le fond de la bouteille se pose.

Dans le compartiment inférieur 12 de l'appareil, se trouve un ventilateur 5, à quatre pales 51, entraîné en rotation par un moteur électrique 52. L'ensemble du ventilateur avec son moteur est monté par une tulipe à pattes élastiquement flexibles 53 dans une jupe inférieure 55 qui fait partie du corps de l'appareil. Cette jupe est fermée sous le ventilateur 5 par une grille 56, qui protège l'accès au ventilateur tout en laissant librement passer l'air qu'il aspire en fonctionnement. Elle se prolonge vers le haut en s'évasant jusqu'à se fixer sur l'enveloppe extérieure du corps 1. Sa paroi est là incurvée, si bien qu'elle forme un déflecteur coopérant avec le fond bombé 34 du noyau 3 pour canaliser le flux d'air pénétrant alors dans le compartiment 12 et le conduire vers la résistance de chauffage 4.

Le mode de montage du ventilateur 5, dont le moteur 52 est montré maintenu dans la jupe inférieure 55 d'une pièce interne du corps 1 qui l'entoure, n'est pas limitatif. En variante de la solution particulière décrite ici, on pourrait, par exemple, préférer monter le ventilateur, par son moteur 52, dans un noyau plus ou moins plein remplaçant le noyau creux 3.

On relève par ailleurs de la figure 1 que l'enveloppe protectrice, en sa partie supérieure 1*b*, rejoint le bord de l'ouverture 23 par une paroi arrondie 26 qui a également un rôle déflecteur, tendant à rabattre le jet formé en sortie de l'espace annulaire 35 pour le projeter en direction radiale vers la paroi de la bouteille.

En éléments accessoires, on a représenté sur la figure 1 les fils électriques 54 alimentant le moteur 52, ainsi qu'une gaîne souple 6 qui les enferme avec les fils électriques alimentant la résistance 4 en un faisceau traversant latéralement l'enveloppe extérieure du corps 1 pour branchement sur une prise secteur usuelle. On voit en outre un interrupteur 7 qui permet de commander le fonctionnement général de l'appareil, ici en tout ou rien aussi bien pour l'alimentation électrique du moto-ventilateur 5 que pour la résistance de chauffage 4. Cet interrupteur est aisément accessible à l'utilisateur sur l'enveloppe cylindrique du corps 1, à proximité de l'un des trois pieds. Il s'agit d'un dispositif à bascule dans le cas représenté. En variante, on peut préférer un bouton poussoir permettant qu'en relâchant la pression d'un doigt sur le bouton, on provoque instantanément l'arrêt de l'appareil.

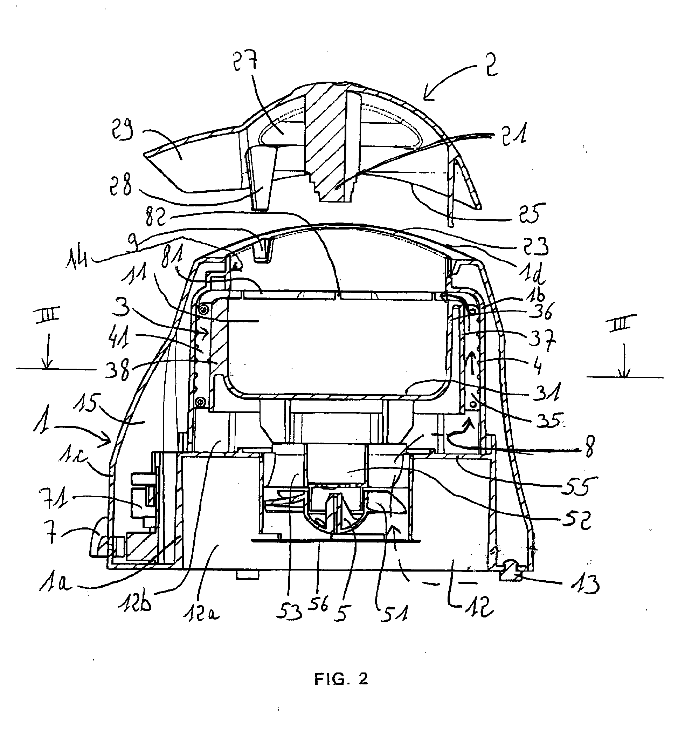

Les figures 2 à 5 illustrent un autre mode de réalisation de l'invention, particulièrement avantageux pour une utilisation multi-fonctionnelle. Autant que possible sans alourdir exagérément la description, les organes similaires ont été affectés des mêmes chiffres de référence.

L'appareil est constitué comme précédemment d'un corps principal 1 et d'un couvercle 2 et chacune de ces deux parties présente un plan de symétrie vertical dans le plan de la coupe représentée sur la figure 2. Le corps 1 est composé des deux pièces sensiblement cylindriques 1*a* et 1*b* formant enveloppe pour les organes internes. Ces deux pièces sont contenues dans un carter 1c réalisé en monobloc, dont la forme permet de donner un aspect esthétique agréable à l'appareil. Le carter 1*c* comporte en partie basse trois pieds angulairement équidistants 13, de préférence constitués de plots en élastomère, qui écartent la base du carter du plan de travail sur lequel il est posé, de manière à permettre l'accès de l'air extérieur vers une grille 56 d'entrée dans l'appareil.

L'interrupteur 7 est porté par le carter 1*c* est avantageusement du type à glissière et actionnable par translation entre trois positions de réglage, dont une position d'arrêt et deux positions de marche à des températures de chauffage différentes. L'interrupteur 7 est relié à des moyens variateurs 71 de la puissance électrique de chauffage, qui sont placés dans un espace 15 laissé libre entre le carter 1c et l'enveloppe protectrice 1*a* - 1*b*. Dans d'autres modes de réalisation suivant l'invention, on pourra également prévoir des moyens de variation de la puissance électrique fournie au ventilateur.

En partie haute, le carter 1c et la pièce 1*b* se rejoignent pour former une ouverture 23, par laquelle la bouteille à réduire est introduite dans l'appareil et qui peut être fermée par le couvercle 2. Le bord supérieur 1*d* du corps 1 présente une forme galbée convexe parallèlement au plan de la coupe, comme illustré sur la figure 2. Par coopération avec une forme complémentaire du bord inférieur du couvercle 2, on peut assurer un guidage relatif vers une position diamétrale définie.

A l'intérieur du corps de l'appareil, on retrouve les compartiments respectivement supérieur et inférieur 11 et 12, et le noyau interne de section circulaire 3 qui les sépare. Dans un souci d'allégement du corps de l'appareil, le noyau 3 est constitué de deux jupes annulaires concentriques respectivement intérieure 36 et extérieure 37, reliées par des entretoises radiales 38. Le noyau 3 est délimité en son fond par le plateau 31 destiné à supporter la bouteille à réduire.

Le compartiment inférieur 12 contient le ventilateur 5 à quatre pales 51 et son moteur électrique 52. Le ventilateur est fixé à une tulipe 53 à pales fixes permettant de diriger l'air propulsé par les pales 51 en un flux laminaire. Le ventilateur 5 est monté dans une jupe inférieure 55 qui sépare le compartiment inférieur 12 en deux espaces 12*a* et 12*b*. Le fond de cette jupe inférieure est formé par la grille 56 à l'aspiration du ventilateur 5.

L'espace 12*a*, séparé du boîtier du ventilateur 5 par la jupe inférieure 55, est avantageusement utilisé comme espace de rangement pour le câble d'alimentation électrique de l'appareil, qui vient se lover en son intérieur.

L'espace 12*b* est délimité par la jupe inférieure 55 et le noyau interne 3. Il définit un chemin qui sera emprunté par l'air propulsé par le ventilateur 5 et qui débouche en partie basse de l'espace annulaire 35, compris entre la jupe extérieure 37 du noyau 3 et l'enveloppe protectrice 1*b*. La résistance électrique 4 s'étend annulairement dans cet espace, tout autour de la coupelle interne de réception d'une bouteille à réduire formée par le noyau 3. Elle y est soutenue par des lamelles verticales 41, de préférence en mica, supportées entre les parois 37 et 1*b*, en leurs parties cylindriques qui sont écartées radialement pour former l'espace annulaire 35.

L'espace annulaire 35 se courbe ensuite vers l'axe de l'appareil pour déboucher dans l'espace interne au noyau 3 par une fente 81 d'expulsion de l'air qui est ménagée annulairement entre la paroi de la jupe interne 36 du noyau 3 et la paroi de l'enveloppe protectrice 1*b*, qui en sa partie terminale 14, se trouve là dans le prolongement de la jupe 36. Au niveau de cette fente, les deux parois cylindriques sont reliées par des pattes 82 maintenant leur écartement à une largeur uniforme de la fente 81.

On remarque ici que la forme du carter 1c est telle que l'espace qu'il ménage autour de l'enveloppe protectrice 1*a* - 1*b*. a un rôle d'isolation thermique qui évite un échauffement des parois extérieures de l'appareil lorsque le chauffage est en route. L'invention prévoit aussi, dans certaines de ses variantes de mise en oeuvre d'économiser le temps de chauffage en assurant une commutation automatique de l'alimentation électrique, déclenchée par exemple par une détection optique du passage d'une bouteille lors de son introduction dans l'appareil ou par toute autre forme de détection de présence, par exemple à son contact au fond de la coupelle de réception. On peut aussi compléter l'automatisation du fonctionnement et améliorer la sécurité en commandant l'arrêt de l'alimentation électique par un minuteur qui limite le temps de chauffage.

Le couvercle 2 est destiné à venir fermer le corps 1, et son bord inférieur 25 présente une forme complémentaire du bord supérieur 1d du corps de l'appareil, c'est-à-dire concave parallèlement au plan de la coupe. Le couvercle est creux et sa paroi externe comporte deux parties concaves symétriques 27 en forme de demi-ovale, qui lui confère globalement une forme ergonomique facilitant à l'utilisateur sa préhension et sa manipulation, ainsi que son appui sur une bouteille en cours de traitement.

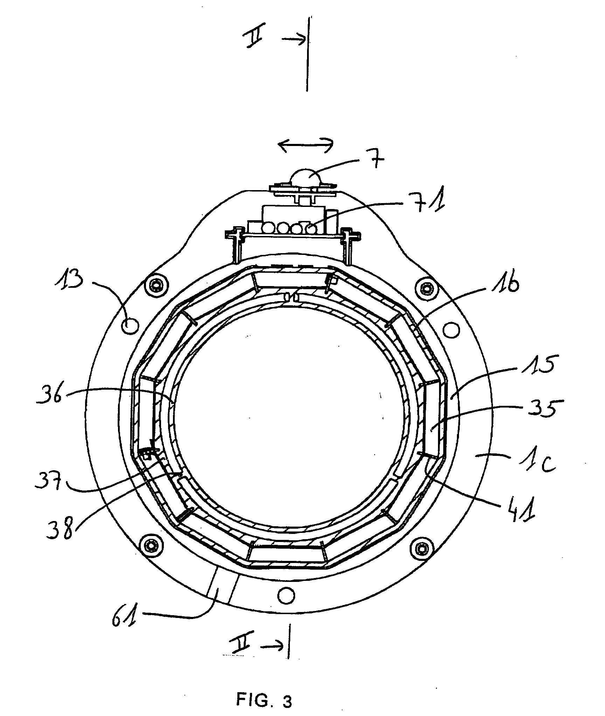

Dans l'exemple de réalisation de la figure 3, le guide 21, destiné à s'insérer dans le goulot de la bouteille, est formé de trois ailettes rigides, orientées radialement et angulairement espacées, qui définissent une saillie circulaire largement évidée. Chacune des ailettes présente une forme à gradins, ce qui permet au guide 21 de mieux s'adapter à tous les diamètres de goulot de bouteille. De plus, le guide ainsi constitué permet à l'air contenu dans la bouteille de s'en échapper facilement au fur et à mesure de la compression.

Le couvercle 2 présente une forme de casquette de paroi interne convexe, prolongée à l'extrémité avant par une visière 29 ouverte également convexe et incurvée vers le bas. Cette forme répond avantageusement à un besoin directionnel du couvercle, pour guider l'air chaud issu du corps de l'appareil, à l'intérieur du couvercle 2 puis à travers l'ouverture délimitée par la visière 29, vers un espace extérieur bien défini, dans une utilisation en tant que sèche-mains. La forme évidée du guide central 21 a ici l'avantage de ne pas gêner la circulation de l'air vers cette ouverture.

Le couvercle 2 est avantageusement pourvu de trois pieds 28 angulairement équidistants, destinés à s'engager, lorsque le couvercle vient fermer le corps de l'appareil, dans des cavités de positionnement 9 situées en vis-à-vis sur le bord supérieur 1*d* du corps 1. A ce niveau il est de préférence prévu que les pieds 28 et les cavités 9 coopèrent non seulement en vue d'un positionnement angulaire précis du couvercle sur l'appareil, mais en plus pour assurer la fixation de l'un sur l'autre. Dans le cas particulier illustré ici, les pieds 28 forment une lèvre de clipsage élastique qui s'engage dans un logement récepteur correspondant et qui est alors efficace à retenir le couvercle en cas d'efforts longitudinaux, mais qui se dégage aisément par rotation manuelle du couvercle.

Une telle fixation des pieds 28 dans les cavités 9 permet de réaliser un ancrage solide du couvercle 2 sur le corps 1 lorsque l'appareil est en position fermée. Cette structure est particulièrement avantageuse pour une utilisation de l'appareil en mode sèche-mains, dans laquelle il est souhaitable d'assurer que le couvercle reste bien en place sur le corps de l'appareil et ne s'en désolidarise pas sous l'effet de la pression exercée sur lui par le souffle d'air sortant du noyau interne de l'appareil que l'on entend guider pour qu'il s'échappe à travers l'ouverture 23.

Par ailleurs, les cavités de positionnement et/ou fixation 9 peuvent avantageusement être mises à profit dans une utilisation de l'appareil en tant que chauffe-plats. En effet, dans certains des modes de réalisation préférés de l'invention, on peut envisager de livrer l'appareil équipé d'une grille plate amovible munie de trois pieds angulairement équidistants destinés à s'insérer dans les cavités 9 du corps 1, de façon à obtenir un support de plat stable. Ceci facilite également la mise en place de la grille sur le corps de l'appareil, dans le cas représenté ici d'un corps à bord supérieur 1*d* convexe. Dans d'autres modes de réalisation de l'invention, pour lesquels le corps 1 présentera un bord supérieur de forme plate et non galbée, la grille amovible ne sera pas nécessairement pourvue des tels pieds. Toutefois, dans un but de stabilité de la grille et donc de sécurité, on préférera assurer tout de même sa fixation sur le corps de l'appareil, de cette façon ou par tout autre moyen aboutissant au même résultat.

La figure 3 illustre une vue en coupe de l'appareil de la figure 2 suivant la ligne III-III. On a schématisé sur cette figure le plan de coupe II-II suivant lequel est réalisée la figure 2. Par souci de clarté, seule l'embase 1*c* du carter a été représentée.

On retrouve sur cette figure l'interrupteur 7, qui peut être actionné entre les trois positions indiquées, les moyens 71 de variation de la puissance électrique de chauffage, et les trois pieds 13. Une encoche 61 ménagée dans l'embase du carter 1c permet le passage du câble d'alimentation électrique de l'appareil.

Le corps de l'appareil est constitué des trois parois cylindriques 1*b*, 37 et 36. Les espaces 15 et 35 séparent respectivement les pièces 1c et 1*b*, et 1*b* et 37. Les lamelles 41, situées dans l'espace annulaire 35, sont disposées régulièrement sur toute la circonférence du corps de l'appareil. Elles supportent la résistance électrique, qui n'est pas représentée ici. Les entretoises 38 qui joignent les jupes 36 et 37 sont également régulièrement réparties tout autour de la circonférence du noyau 3.

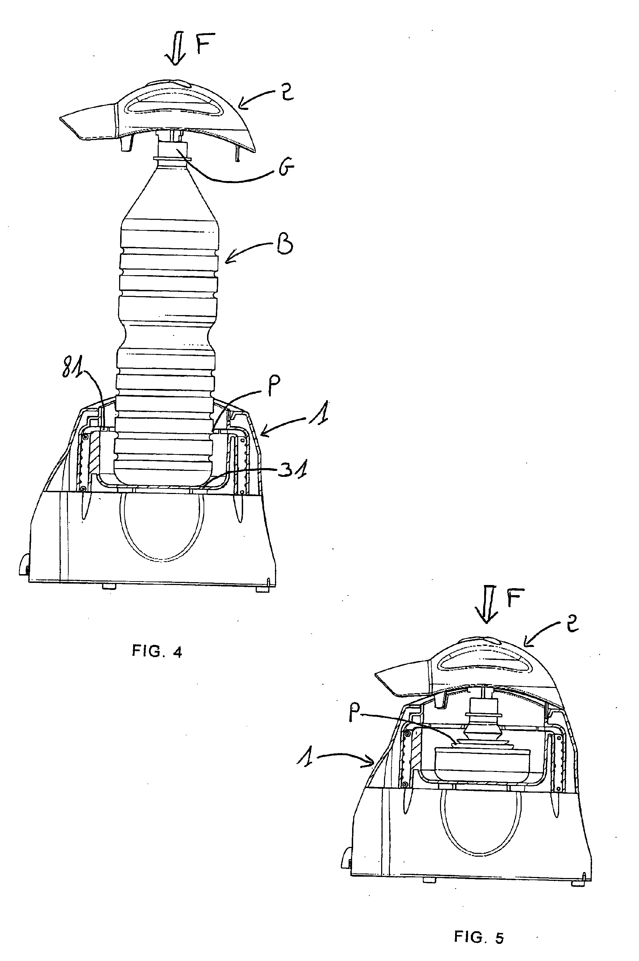

Le fonctionnement de l'appareil ainsi décrit, qui ressort déjà de ce qui précède, va maintenant être précisé, en faisant référence non seulement à la figure 2, mais aussi aux figures 4 et 5, montrant l'état d'une bouteille en cours de réduction à deux stades de son compactage.

Comme il est représenté en figure 4, la bouteille B à réduire, vide et débarrassée de son bouchon, est initialement mise en place dans l'appareil en l'introduisant verticalement par l'ouverture 23 jusqu'à l'amener à reposer par son fond en butée contre la plaque support 31. Le cas échéant, on aura auparavant introduit le guide 21 du couvercle 2 dans son goulot G, comme un bouchon. Dans certaines réalisations prévues par l'invention, la souplesse élastique de la matière plastique constituant à ce niveau le couvercle 2 peut permettre que le guide centreur constitue un moyen de liaison provisoire entre le couvercle 2 et la bouteille B, permettant de porter celle-ci par la poignée 27. Dans tous les cas, le guide permet l'évacuation de l'air à travers lui, soit qu'il soit annulaire autour d'un volume central débouchant à l'extérieur du couvercle comme sur la figure 1, soit qu'il soit réalisé par des ailettes espacées comme sur la figure 2.

L'appareil est ensuite mis en marche en enclenchant l'interrupteur 7. Deux puissances de chauffage peuvent être sélectionnées, ce qui permet de jouer sur la température de l'air chaud projeté sur la paroi de la bouteille. On peut ainsi adapter la température de l'air au type de matière plastique constituant la bouteille, pour obtenir un ramollissement efficace de celle-ci même dans le cas de parois épaisses ou relativement rigides, sans toutefois provoquer sa fusion dans le cas de parois plus facilement fusibles.

Le ventilateur aspire alors de l'air qu'il prélève de l'atmosphère ambiante sous l'appareil, dans l'espace laissé libre par les pieds 13, à travers la grille 56. C'est du moins ce qui est prévu dans le cas particulier décrit, car en variante, il pourra être jugé plus avantageux de permettre l'aspiration d'air par le pourtour de l'appareil, donc notamment à travers l'enveloppe protectrice et le carter du corps 1.

On notera ici que, principalement le noyau 3, mais aussi la partie supérieure de l'enveloppe protectrice du corps 1 protégeant la résistance 4, et de préférence l'ensemble du corps 1 y compris en ses pièces internes, ainsi que le couvercle 2, sont constitués en un matériau thermiquement inerte, n'emmagasinant pas la chaleur. On satisfait par là à un premier objectif qui est d'éviter une surchauffe de la bouteille et un ramollissement de son fond qui pourrait entraîner son collage sur le plateau support 31, et par suite gêner son extraction après compactage. En objectif secondaire, cela permet d'éviter tout risque de brûlure de l'utilisateur au contact des parties accessibles de l'appareil, en complément du fait que la résistance électrique 4 est inaccessible à l'utilisateur, car elle ne peut être atteinte qu'à travers la fente 81, trop étroite pour que l'on puisse y insérer les doigts.

Comme il ressort déjà de la description de la figure 2, quand l'appareil est ainsi mis en route tandis qu'une bouteille est présente comme illustré par la figure 4, l'air prélevé de l'extérieur de l'appareil est refoulé par le ventilateur 5 et mis en circulation dans l'espace 12*b* entre le noyau 3 et la jupe inférieure 55 ; puis le flux annulaire 8 ainsi formé passe dans l'espace annulaire cylindrique 35 s'étendant verticalement entre la jupe 37 et l'enveloppe protectrice en sa partie 1*b*, où la section de passage est rétrécie autour du noyau 3 et où l'air se chauffe au contact de la résistance 4. De là il est rabattu horizontalement et projeté à travers la fente 81 en un jet annulaire dirigé radialement vers la paroi latérale P de la bouteille sur une section de celle-ci se trouvant à l'intérieur du corps de l'appareil, au niveau de la fente 81. L'air refroidi s'évacue alors en passant par l'ouverture 23 autour de la bouteille.

Sous l'action du jet annulaire d'air chaud, la paroi de la bouteille se ramollit localement et devient aisément déformable. Il est à noter que, bien que le ramollissement soit maximal au niveau de la paroi à hauteur de la fente annulaire 81, on observe également un ramollissement moindre des parties situées de part et d'autre de la fente, sur une hauteur de plusieurs centimètres, ce qui permet de réaliser une réduction complète de la bouteille. Comme, au même moment, l'utilisateur applique manuellement une pression F qui tend à enfoncer la bouteille dans l'appareil alors que son fond reste rigide en appui sur le plateau support, la paroi de la bouteille se plisse en se repliant sur elle-même en accordéon tandis que l'air s'en échappe à travers le couvercle 2 servant d'organe presseur. L'opération se poursuit, pli après pli, pendant que la bouteille s'enfonce de plus en plus sous la poussée exercée verticalement par l'utilisateur au moyen du couvercle 2, sur une partie supérieure de la bouteille encore à l'extérieur de l'appareil, jusqu'à parvenir à l'état de la figure 5. Le cas échéant, on peut même enfoncer partiellement le goulot dans la bouteille compactée, éventuellement jusqu'à en toucher le fond.

La bouteille ayant été ainsi complètement réduite, on arrête le chauffage et la circulation d'air et l'on peut extraire la bouteille compactée de l'appareil à la main pour la jeter.

En ce qui concerne les autres modes d'utilisation, le fonctionnement de l'appareil est décrit en se basant sur les figures 2 et 4.

L'utilisation en sèche-mains est réalisée appareil vide et fermé, c'est-à-dire le couvercle 2 étant posé sur le corps 1 et les pieds 28 étant insérés dans les cavités 9. L'appareil est mis en position de marche. Le jet annulaire d'air chaud qui s'échappe de la fente 81 franchit l'ouverture 23 et il est guidé à l'intérieur du couvercle 2, grâce à la forme convexe de celui-ci, vers la visière 29, qui le dirige vers l'extérieur de l'appareil, dans la zone située à l'avant de la partie supérieure du corps 1 de l'appareil. Dans le mode de réalisation préféré de l'invention représenté ici, le carter 1*c* présente à cet endroit une forme légèrement concave, ce qui augmente la section de l'ouverture. L'air chaud produit dans l'appareil est ainsi soufflé à cet endroit précis de l'espace extérieur, sur les mains ou sur tout autre partie du corps ou tous autres objets nécessitant d'être séchés ou réchauffés qui y sont correctement positionnés.

Dans son mode d'utilisation en tant que chauffe-plats, l'appareil est complété d'un accessoire amovible, par exemple une grille plate munie de pieds identiques aux pieds 28 du couvercle 2. La grille est fixée sur le corps 1 vide, par insertion de ses pieds 28 dans les cavités 9. L'air chaud propulsé par la fente 81 s'échappe par l'ouverture 23 et passe à travers les mailles de la grille, pour venir entrer en contact avec un plat disposé au-dessus d'elle. Ce mode d'utilisation est particulièrement avantageux, puisqu'il permet de maintenir facilement un plat au chaud aussi longtemps que nécessaire. L'invention peut s'appliquer à tout plat en matériau résistant à la chaleur.

Suivant une caractéristique avantageuse de l'invention, la grille support de plat est conformée pour pouvoir, quand elle n'est pas utilisée, s'intégrer dans l'appareil en se logeant dans le compartiment vide du fond du carter, autour de la jupe supportant la grille 56 d'admission d'air et contenant le ventilateur.

Enfin, l'appareil suivant l'invention peut également être utilisé par exemple en tant que chauffe-biberons, sous réserve que la température de l'air chaud et le matériau constituant le biberon soient choisis de telle sorte qu'il ne se produise pas de ramollissement de la paroi du biberon.

La description qui précède explique clairement comment l'invention permet d'atteindre les objectifs qu'elle s'est fixés. En particulier, le ventilateur utilisé pour faire circuler l'air à l'intérieur du compartiment inférieur de l'appareil ne consomme que très peu d'énergie, ce qui fait que l'énergie consommée par l'appareil se limite à celle que demande la résistance pour amener l'air à la température nécessaire au ramollissement de la matière plastique dont sont constituées les parois latérales des bouteilles à réduire.

D'autre part, la forme du guide 21 en saillie sur le dessous du couvercle 2 lui permet de s'introduire dans des goulots de bouteilles présentant des diamètres variés. De plus, la coupelle support peut accueillir toutes sortes de sections de fond de bouteille, de dimensions très différentes, car elle ne présente pas une forme spécifique d'un type de bouteille particulier. Le plateau support décrit pourrait toutefois former des cuvettes concentriques de profondeurs et diamètres variables pour mieux épouser la forme de fonds de bouteilles de diamètres différents.

Dans tous les cas, un même modèle d'appareil construit conformément à l'invention peut sans difficulté servir pour compacter des bouteilles de contenance variant de 0,5 à 2 litres. Ceci est dû en bonne partie au fait que le couvercle qui sert de moyen de pression manuelle pour appuyer verticalement sur la bouteille suivant son axe longitudinal est complètement amovible et détachable du corps principal de l'appareil. Il trouve néanmoins sa place sur l'appareil en fermeture de l'ouverture d'introduction de chaque bouteille, ce qui facilite le rangement de l'appareil et le protège des poussières et salissures quand il n'est pas utilisé. Il reste cependant à recommander de ne pas utiliser l'appareil suivant l'invention tel qu'il vient d'être décrit pour traiter des bouteilles ayant contenu des produits inflammables ou des produits corrosifs comme les détergents ou l'eau de Javel.

Il ressort également de ce qui précède que néanmoins l'invention n'est pas limitée aux formes de mise en oeuvre qui ont été décrites et représentées sur les figures, ni aux variantes qui ont été spécifiquement signalées. Elle peut se concrétiser sous encore bien d'autres variantes tout en restant dans le cadre de l'invention.

On peut mentionner en particulier la possibilité de compléter l'appareil par un déclenchement automatique de sa mise en marche et son arrêt, assuré par exemple par un contacteur placé sous l'un des pieds 13 ou par détecteur de proximité sensible à la présence d'une bouteille en butée par son fond sur le plateau 31. On peut aussi souligner que le couvercle peut se fixer de diverses manières au corps principal de l'appareil tout en restant amovible et complètement séparable. Enfin, l'alimentation de la résistance électrique constituant les moyens de chauffage peut avantageusement être assurée par l'intermédiaire d'un système de régulation imposant un seuil maximum de montée en température afin d'éviter tout problème de surchauffe au niveau de la résistance électrique.

## Revendications

1. Appareil de réduction de bouteilles en matière plastique, comprenant, à l'intérieur d'une enveloppe protectrice (1*a* - 1*b*), des moyens (3) de réception partielle d'une bouteille à réduire introduite par une ouverture (23) ménagée à cet effet en partie haute de l'appareil jusqu'à amener son fond en butée sur un support (31) prévu à cet effet, des moyens ventilateurs (5) pour aspirer de l'air extérieur, le faire circuler au voisinage de moyens de chauffage (4) disposés annulairement autour desdits moyens de réception (3) et le refouler en un jet annulaire d'air chaud qui est projeté radialement vers une partie inférieure de ladite bouteille déjà présente dans ladite enveloppe, et des moyens (2) de pression manuelle sur une partie supérieure de ladite bouteille encore extérieure à ladite enveloppe pour l'enfoncer en appui sur ledit support par repliement progressif sur elle-même de sa paroi ramollie par l'air chaud projeté.

2. Appareil de réduction de bouteilles selon la revendication 1, **caractérisé en ce que** lesdits moyens de pression manuelle sont essentiellement réalisés sous la forme d'un couvercle amovible (2) apte à venir fermer ladite ouverture (23) en l'absence d'une bouteille à réduire.

3. Appareil suivant la revendication 2, **caractérisé en ce que** ledit couvercle forme une poignée (24, 27) servant d'organe de préhension manuelle.

4. Appareil suivant la revendication 2 ou 3, **caractérisé en ce que** ledit couvercle présente un guide centreur (21) formé d'une partie centrale en saillie s'engageant dans le goulot d'une bouteille en cours de traitement, ledit guide centreur étant de préférence creux ou largement évidé pour permettre à l'air de s'échapper de ladite bouteille.

5. Appareil suivant l'une quelconque des revendications 2 à 4, **caractérisé en ce que** ledit couvercle présente une forme permettant, lorsqu'il ferme ladite ouverture (23), de diriger de façon concentrée l'air chaud généré dans l'appareil vers un espace extérieur défini, de sorte à permettre une utilisation de l'appareil en tant que sèche-mains, ledit couvercle possédant de préférence une paroi interne de forme convexe et étant prolongé à une extrémité par une visière ouverte (29) de forme convexe et incurvée vers le bas.

6. Appareil suivant l'une quelconque des revendications 2 à 5, **caractérisé en ce que** ledit couvercle est muni de pieds (28) s'insérant dans des cavités (9) de positionnement et/ou de fixation situées en vis-à-vis sur le bord supérieur (1*d*) du corps de l'appareil délimitant ladite ouverture (23), lorsque ledit couvercle vient fermer ladite ouverture.

7. Appareil suivant l'une quelconque des revendications 1 à 6, **caractérisé en ce qu'**il comporte des moyens déflecteurs qui canalisent l'air et organisent sa circulation en un flux annulaire autour d'un noyau interne (3) de réception d'une partie inférieure de ladite bouteille, dans un espace annulaire (35) ménagé entre une jupe annulaire (33, 36-37) formant une paroi externe dudit noyau et ladite enveloppe (1*b*), et **en ce que** lesdits moyens de chauffage comportent une résistance électrique (4) disposée annulairement autour des moyens de réception (3) dans ledit espace annulaire (35), entre un compartiment inférieur (12) d'aspiration d'air à partir de l'extérieur, et un compartiment supérieur (11) dans lequel l'air est projeté, les deux compartiments étant ménagés dans le corps (1) de l'appareil autour dudit noyau interne (3).

8. Appareil suivant la revendication 7, **caractérisé en ce que** lesdits moyens déflecteurs sont conformés pour canaliser le flux d'air chaud en sortie dudit espace annulaire (35) vers une fente annulaire (81) d'où il est projeté radialement vers la paroi de la bouteille présente dans ledit compartiment supérieur (11), ladite fente étant formée sous une largeur uniforme entre une paroi interne dudit noyau (3) et une partie terminale (14) de ladite enveloppe se situant dans son prolongement.

9. Appareil suivant la revendications 8, **caractérisé en ce que** ledit noyau (3) forme un plateau support (31) pour le fond d'une bouteille à traiter situé en travers de ladite jupe annulaire (33, 36-37) à un niveau inférieur à ladite fente (81).

10. Appareil selon l'une quelconque des revendications 1 à 9, **caractérisé en ce que** lesdits moyens ventilateurs sont montés dans une jupe inférieure (55) interne à ladite enveloppe protectrice, qui est prolongée pour former déflecteur pour la circulation de l'air aspiré, ce dernier étant prélevé de l'extérieur au travers d'une grille (56) sous une embase de l'appareil qui ménage avantageusement, autour de ladite jupe inférieure (55), un espace de rangement pour un câble d'alimentation électrique.

11. Appareil selon l'une quelconque des revendications 1 à 10, **caractérisé en ce qu'**il comporte un interrupteur (7) de mise en route et d'arrêt du fonctionnement des moyens de chauffage et des moyens ventilateurs, ainsi de préférence que des moyens (71) de variation de la puissance électrique de chauffage contrôlés par ledit interrupteur.

12. Appareil selon l'une quelconque des revendications 1 à 11, **caractérisé en ce qu'**il comporte en outre un dispositif amovible de support de récipients, à poser sur le bord supérieur (1*d*) du corps de l'appareil délimitant ladite ouverture (23), ledit dispositif étant de préférence formé d'une grille plate, notamment munie de pieds (28) destinés à s'insérer dans des cavités (9) situées en vis-à-vis sur ledit bord supérieur lorsque ledit dispositif vient fermer ladite ouverture.
